(19) Europäisches Patentamt
European Patent Office
Office européen des brevets

(11) EP 1 569 213 A1

(12) **EUROPEAN PATENT APPLICATION**
published in accordance with Art. 158(3) EPC

(43) Date of publication:
**31.08.2005 Bulletin 2005/35**

(21) Application number: **03741210.3**

(22) Date of filing: **04.07.2003**

(51) Int Cl.7: **G11B 7/24**

(86) International application number:
**PCT/JP2003/008558**

(87) International publication number:
**WO 2004/006235 (15.01.2004 Gazette 2004/03)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **05.07.2002 JP 2002197765**

(71) Applicant: **Hitachi Chemical Co., Ltd.**
**Tokyo 163-0449 (JP)**

(72) Inventors:
- **MIYOSHI, Hiroko, Yamazaki Works Hitachi-shi Ibaraki 317-8555 (JP)**
- **NAKANO, Akio, Yamazaki Works Hitachi-shi Ibaraki 317-8555 (JP)**
- **TSUCHIYA, KATSUNORI, Yamazaki Works Hitachi-shi Ibaraki 317-8555 (JP)**

(74) Representative:
**Ouzman, Beverley Nicola Claire et al**
**Murgitroyd & Company**
**Scotland House**
**165-169 Scotland Street**
**Glasgow G5 8PL (GB)**

(54) **PHOTOSENSITIVE RESIN COMPOSITION AND PHOTOSENSITIVE ELEMENT USING THE SAME**

(57) A photosensitive resin composition for formation of a spacer layer in an optical disk comprising: two transparent substrates positioned opposite each other; and a recording layer and spacer layer positioned between the opposing sides of the transparent substrates, wherein the photosensitive resin composition comprises: a binder polymer; a photopolymerizable compound having an ethylenic unsaturated bond; and a photopolymerization initiator, and has a glass transition temperature after curing of 100 to 180°C.



Printed by Jouve, 75001 PARIS (FR)

## Description

## Technical Field

The present invention relates to a photosensitive resin composition and to a photosensitive element employing the same.

## Background Art

Recent developments in information technology such as computer device technology, software technology and communication technology have permitted greater volumes of information to be transmitted at high speed.

These fields require recording media with high recording density, and DVD (Digital Versatile Disk) is an important focus of attention as a high-density recording medium. A DVD has a recording capacity of about 7 times that of a CD-ROM due to a shorter wavelength power source and a higher aperture object lens, but it is believed that recording densities will increase even more in the future with implementation of blue semiconductor lasers. An additional goal is to achieve further increased density with optical disks such as DVDs, through the development of multilayer optical disks produced by alternating lamination of recording layers having information-bearing pits or grooves formed thereon, and spacer layers made of transparent resins.

## Disclosure of the Invention

Gradual deterioration with time has been a problem with conventional optical disks, however, and particularly with multilayer optical disks (having multiple recording layers). Specifically, when the optical disk is subjected to an environmental acceleration test (for example, a storage test at a temperature of 80°C, 85% RH for 96 hours), deterioration of the recording layer has been a significant inconvenience. In some cases, poor adhesion between the optical disk substrate and spacer layer has occurred.

With the aim of solving the problems mentioned above, the present inventors studied the causes of deterioration from the viewpoint of chemical changes in the recording layer to determine whether deterioration of the recording layer is due to oxidation of the recording layer or to contamination of impurities in the material used to form the recording layer, and surprisingly, discovered that deterioration occurs due to deformation (physical change) of the recording layer occurring with thermal expansion of the spacer layer. Also, upon examining the causes of poor adhesion between the optical disk base and spacer layer, it was discovered that poor adhesion is a result of the molecular structure of the resin used to form the spacer layer.

The present invention has been accomplished based on the knowledge described above, and its object is to provide a composition for formation of an optical disk spacer layer which exhibits properties ordinarily required for a spacer layer, such as transparency with respect to the reading laser and a uniform film thickness, while also preventing deformation of the recording layer due to thermal expansion or poor adhesion between the optical disk substrate and spacer layer.

As a result of much diligent research carried out on the basis of the aforementioned knowledge, the present inventors have discovered that the object stated above can be achieved by using a cured photosensitive resin composition having a prescribed composition as the optical disk spacer layer, wherein the glass transition temperature of the cured composition is within a designated range, or the crosslinking density of the cured composition is within a designated range, and the present invention has been thereupon completed.

Specifically, the present invention provides a photosensitive resin composition for formation of a spacer layer in an optical disk comprising: two transparent substrates positioned opposite each other; and a recording layer and spacer layer positioned between the opposing sides of the transparent substrates, wherein the photosensitive resin composition comprises: a binder polymer; a photopolymerizable compound having an ethylenic unsaturated bond; and a photopolymerization initiator, and has a glass transition temperature after curing of 100 to 180°C.

Since the photosensitive resin composition of the present invention has the composition described above and the glass transition temperature (hereinafter, "Tg") of the cured photosensitive resin composition is 100 to 180°C, an optical disk fabricated using the composition has minimized thermal expansion of the cured photosensitive resin composition even when stored for long periods at high temperature and/or high humidity. As a result, since deformation of the optical disk recording layer is prevented, the problem of deterioration of optical disks, and particularly multilayer optical disks, does not occur with time.

The present invention also provides a photosensitive resin composition for formation of a spacer layer in an optical disk comprising: two transparent substrates positioned opposite each other; and a recording layer and spacer layer positioned between the opposing sides of the transparent substrates, wherein the photosensitive resin composition comprises: a binder polymer; a photopolymerizable compound having an ethylenic unsaturated bond; and a

photopolymerization initiator, and has a crosslinking density after curing of at least 1100 mmol/L, as calculated by the following formula (1):

$$\rho = E'/3\varphi RT \tag{1}$$

wherein

$\rho$ is a crosslinking density;
T is a temperature 40°C greater than a temperature at which a maximum value of the loss tangent is exhibited when measuring the dynamic viscoelasticity with varying temperature;
E' is a storage elastic modulus at the temperature T;
$\varphi$ is a front coefficient; and
R is the gas constant.

Since the photosensitive resin composition of the present invention can reduce poor adhesion between the optical disk substrate and spacer layer by employing the construction described above, it contributes to resistance against deterioration of optical disks, and particularly multilayer disks, with the passage of time.

The present invention further provides a photosensitive element comprising: a support; and a photosensitive resin composition layer composed of a photosensitive resin composition mentioned above formed on the support. Since this type of photosensitive element possesses a photosensitive resin composition layer composed of a photosensitive resin composition according to the present invention, and the cured layer can be used as the spacer layer in an optical disk, it is possible not only to prevent the problem of deterioration of the recording layer with time, but also to achieve improvement in the properties required for a spacer layer, such as transparency with respect to the reading laser and a uniform film thickness.

## Brief Description of the Drawings

Fig. 1 is a cross-sectional view of a first mode of an optical disk.
Fig. 2 is a cross-sectional view of a second mode of an optical disk.
Fig. 3 is a cross-sectional view of a third mode of an optical disk.
Fig. 4 is a cross-sectional view of a fourth mode of an optical disk.
Figs. 5A to E are cross-sectional views conceptually illustrating a process for production of a multilayer optical disk.
Fig. 6 is an illustration showing an example of infrared absorption spectrum variation before and after ultraviolet irradiation, for acryl groups in the photopolymerizable compound of a photosensitive resin composition.
Fig. 7 is an illustration showing an example of measurement results for the dynamic viscoelasticity of a photosensitive resin composition after curing.

## Best Mode for Carrying Out the Invention

Preferred embodiments of the present invention will now be explained.

(Photosensitive resin composition)

As mentioned above, the photosensitive resin composition of the present invention is used for formation of a spacer layer in an optical disk comprising two transparent substrates positioned opposite each other and a recording layer and spacer layer positioned between the opposing sides of the transparent substrates.

Figs. 1, 2, 3 and 4 are cross-sectional views of optical disks to which the photosensitive resin composition of the present invention can be applied. The optical disk 1 (monolayer optical disk) shown in Fig. 1 has a recording layer 12 and spacer layer 14 each formed in that order on a transparent substrate 10, with a transparent substrate 10 provided on the spacer layer 14. The optical disk 1 (multilayer optical disk) shown in Fig. 2 has one recording layer 12 provided between the spacer layer 14 and the transparent substrate 10 according to the optical disk 1 shown in Fig. 1. The optical disk 1 (multilayer optical disk) shown in Fig. 3 has two layers with recording layers 12 and spacer layers 14 formed in an alternating manner on a transparent substrate 10, a transparent substrate 10 being formed on the spacer layer 14. The optical disk 1 (multilayer optical disk) shown in Fig. 4 has one recording layer 12 provided between the spacer layer 14 and the transparent substrate 10 according to the optical disk 1 shown in Fig. 3.

A concrete example of a process for production of a multilayer optical disk employing a photosensitive resin

composition according to the present invention is shown in Figs. 5A to 5E.

Specifically, on the pitted side of a pitted transparent substrate 10 (Fig. 5A) there is formed a recording layer 12 made of a metal thin-film (Fig. 5B). Next, after forming a spacer layer 14 made of the photosensitive resin composition of the present invention on the recording layer 12, a stamper 16 is contacted with the spacer layer 14 (Fig. 5C) to form pits in the spacer layer 14 (Fig. 5D). A recording layer 12 made of a metal thin-film is then formed on the spacer layer 14 by vacuum vapor deposition or sputtering (Fig. 5E). Steps B to E in Fig. 5 are repeated to form a multilayer structure. The spacer layer 14 is formed by laminating the photosensitive resin composition layer on the recording layer 12, optionally contacting a stamper 16 with the photosensitive resin composition layer laminated on the recording layer 12 to form pits, and then accomplishing photocuring by irradiation with active light rays such as ultraviolet rays (or alternatively, heat curing).

The Tg of the photosensitive resin composition after curing is 100 to 180°C, where "curing" according to the present invention is carried out by determining the degree of cure before and after increasing the ultraviolet exposure by units of 100 mJ, where ultraviolet rays are irradiated in an exposure dose before increase in cases where the change in the degree of cure is within 2 to 3% after increase compared to the degree of cure before increase. The "degree of cure" is calculated by using an infrared spectrometer to determine the peak heights at 812 $cm^{-1}$, as the characteristic absorption of out-of-plane bending vibration of acryl groups in the photopolymerizable compound of the photosensitive resin composition layer, for the photosensitive element before and after ultraviolet irradiation, and calculating the value from the ratio of the heights. The "Tg" according to the present invention refers to the temperature at which the loss tangent is at maximum when measuring the dynamic viscoelasticity as described below.

The Tg mentioned above is measured by DMA (Dynamic Mechanical Analysis). Meanwhile, the Tg as measured by TMA (Thermomechanical Analysis) is 80 to 160°C. The "Tg" according to TMA is measured by cutting out the cured film obtained in the manner described above to a size of 4 mm x 20 mm and using a TMA (TMA-120, product of Seiko Instruments, Inc.) for measurement in tensile mode with a load of 3 g, at a temperature elevating rate of 5°C/min. "TMA" is a method of measuring the deformation of a substance under a non-oscillatory load as a function of temperature, while the temperature of the substance is adjusted according to a prescribed program, and since the slope of the curve obtained by TMA corresponds to changes in the thermal expansion rate, the Tg can be determined from the change in the slope.

When the Tg after curing of the photosensitive resin composition is below 100°C, inconveniences may result such as thermal expansion of the cured product occurring under high temperature conditions, or local thermal expansion of the cured product with increasing temperature by the reading laser light. If the Tg is higher than 180°C, the flexibility of the cured product will be insufficient, and adhesion with the transparent substrate or other layers of the optical disk will be inferior. The Tg of the cured photosensitive resin composition layer is preferably 110 to 170°C, and more preferably 120 to 160°C.

The Tg of the cured photosensitive resin composition can be adjusted to within the preferred ranges mentioned above by the following methods, for example.

(i) A method of using a compound with alicyclic groups such as a (meth)acrylic acid cycloalkyl ester as the monomer unit of the binder polymer.

(ii) A method of increasing the crosslinking density of the photosensitive resin composition.

The crosslinking density of the cured photosensitive resin composition is 1100 mmol/L or greater, and according to the present invention the term "crosslinking density" is the value calculated using the following formula (1) described in the literature (Ogata et al., J. Appl. Polym. Sci., 48, 583(1993)).

$$\rho = E'/3\varphi RT \qquad (1)$$

Formula (1) is known as the rubbery state formula. In this formula, $\rho$ is a crosslinking density, T is a temperature 40°C greater than a temperature at which a maximum value of the loss tangent is exhibited when measuring the dynamic viscoelasticity with varying temperature, E' is a storage elastic modulus at the temperature T, $\varphi$ is a front coefficient, and R is the gas constant. The definitions of E', $\varphi$ and T in formula (1) are based on descriptions in the literature (Murayama et al., J. Polym. Sci., A-2, 8, 437(1970)), and the front coefficient $\varphi$ is 1.

The storage elastic modulus is the value measured using a dynamic viscoelasticity measuring instrument (DMA (Dynamic Mechanical Analysis) RSA-II viscoelastic analyzer by Rheometrics), under the conditions listed below and with a chuck distance of 20 mm, a test frequency of 1 Hz, a temperature range of 0 to 200°C, a temperature elevating rate of 5°C/min and under tensile mode.

Options: Auto Tension Adjustment

Mode: Static Force Tracking Dynamic Force
Auto Tension Direction: Tension
Initial Static Force: 70 g

T and E' are determined from these measurement results and the values are inputted into formula (1) to calculate the crosslinking density. The measuring sample used is obtained by cutting out a 6 mm x 35 mm strip from the cured film obtained by subjecting the photosensitive resin composition layer to ultraviolet irradiation at 2 J/cm$^2$ using a large-size UV irradiator (QRM-2317-F-00 by Oak Corp.) equipped with a high-pressure mercury vapor lamp.

If the crosslinking density of the cured photosensitive resin composition is less than 1100 mmol/L, the inconvenience of poor adhesion with the optical disk substrate may occur. If the crosslinking density exceeds 8000 mmol/L, the inconveniences of greater curing shrinkage of the photosensitive resin composition and warping of the optical disk substrate may occur. The crosslinking density of the cured photosensitive resin composition is preferably 1100 to 8000 mmol/L, more preferably 2000 to 7500 mmol/L, even more preferably 2500 to 7000 mmol/L and most preferably 3000 to 6000 mmol/L.

The crosslinking density of the cured photosensitive resin composition can be adjusted to within the preferred ranges mentioned above by the following methods, for example.

(i) A method of increasing the proportion of ethylenic unsaturated bonds in the photosensitive resin composition.
(ii) A method of using a low molecular weight compound as the photopolymerizable compound with an ethylenic unsaturated bond.
(iii) A method of using a polymer with a double bond on a side chain.

A photosensitive resin composition of the present invention having a Tg after curing of 100 to 180°C and a crosslinking density after curing of 1100 mmol/L or greater can inhibit thermal expansion of the cured product and prevent deterioration of the recording layer with time, while also providing excellent adhesion between the optical disk substrate and spacer layer.

(Binder polymer)

As the binder polymer (hereinafter also referred to as "component (A)") , an aromatic polycarbonate or a polymer having a double bond on a side chain is particularly preferred, and it may be used alone or in combination of them. The binder polymer is preferably selected so as to give the photosensitive resin composition a Tg after curing of 100 to 180°C and/or a crosslinking density after curing of 1100 mmol/L or greater. The binder polymer may also contain a resin such as an acrylic resin, styrene-based resin, epoxy-based resin, amide-based resin, amideepoxy-based resin, alkyd-based resin, phenol-based resin or the like. Such a polymer is also preferably adjusted so that the Tg and crosslinking density are in the aforementioned ranges.

The weight-average molecular weight of the binder polymer is preferably at least 10,000, more preferably 10,000 to 300,000, even more preferably 20,000 to 100,000 and most preferably 40,000 to 60,000. If the weight-average molecular weight is less than 10,000 the film-forming property will tend to be inferior, and if it is greater than 300,000 the solubility and compatibility with solvents and the monomer will tend to be lower, thereby hampering the handleability. The weight-average molecular weight is preferably within the aforementioned preferred ranges especially when the binder polymer is an aromatic polycarbonate. The weight-average molecular weight according to the present invention is the weight-average molecular weight based on a calibration curve using standard polystyrene by gel permeation chromatography (GPC).

(Aromatic polycarbonate)

An aromatic polycarbonate as the binder polymer is preferably a polymer having a repeating unit represented by the following general formula (1).

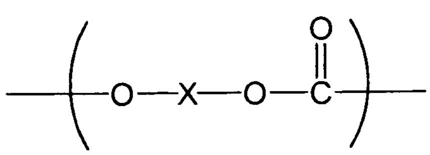

・・・(1)

[wherein X represents a divalent group represented by formula (2) below, a divalent group represented by formula (3)

below or a divalent group represented by formula (4) below.]

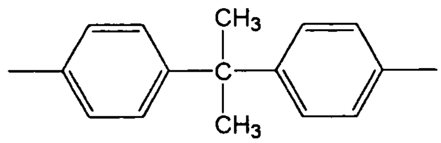

· · · (2)

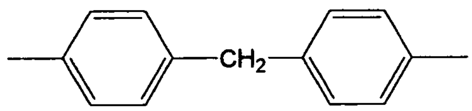

· · · (3)

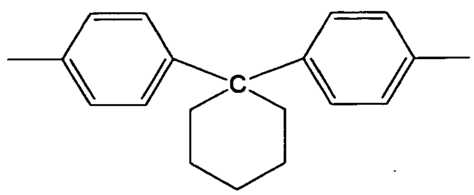

· · · (4)

Compounds having two hydroxyl groups bonded to each divalent group represented by formulas (2), (3) and (4) above are compounds known as bisphenol A, bisphenol F and bisphenol Z, and therefore particularly preferred aromatic polycarbonates for the binder polymer are bisphenol A-type polycarbonates, bisphenol F-type polycarbonates and bisphenol Z-type polycarbonates.

The repeating unit represented by general formula (1) above is preferably included at 40 to 1500 units in the molecule. The aromatic polycarbonate may also contain other repeating units so long as it contains one represented by general formula (1), and it has at least one divalent group represented by formulas (2) to (4) above. When it includes a repeating unit other than a repeating unit represented by general formula (1), or when it contains different types of repeating units represented by general formula (1), the repeating units may have a random chain structure or a block chain structure.

(Polymer having double bond on a side chain)

The polymer having an ethylenic unsaturated bond on a side chain as the binder polymer is preferably a polymer obtained by reacting a carboxyl group-containing polymer with at least one monomer selected from the group consisting of : a hydroxyl monomer with an ethylenic unsaturated bond and a hydroxyl group; and a glycidyl monomer with an ethylenic unsaturated bond and a glycidyl group (hereinafter referred to as Polymer 1 having an ethylenic unsaturated bond")

and/or a polymer obtained by reacting a hydroxyl group-containing polymer with at least one monomer selected from the group consisting of: a glycidyl monomer with an ethylenic unsaturated bond and a glycidyl group; and an isocyanate monomer with an ethylenic unsaturated bond and an isocyanate group (hereinafter referred to as Polymer 2 having an ethylenic unsaturated bond").

Polymer 1 having an ethylenic unsaturated bond is a polymer obtained by reaction between the carboxyl group of a carboxyl group-containing polymer and the hydroxyl group of a hydroxyl monomer and/or the glycidyl group of a glycidyl monomer, and the polymer has ethylenic unsaturated bonds introduced at side chains via ester bonds and/or ether bonds.

Polymer 2 having an ethylenic unsaturated bond is a polymer obtained by reaction between the hydroxyl group of a hydroxyl group-containing polymer and the glycidyl group of a glycidyl monomer and/or the isocyanate group of an isocyanate monomer, and the polymer has ethylenic unsaturated bonds introduced at side chains via ether bonds and/or urethane bonds.

As a carboxyl group-containing polymer to be used for synthesis of Polymer 1 having an ethylenic unsaturated bond there are preferred one or more polymers selected from the group consisting of: a copolymer of a carboxyl group-containing carboxyl monomer and a monomer which copolymerize with the carboxyl monomer (hereinafter referred to as "Carboxyl Polymer 1"); a polymer obtained by condensation of a phenoxy resin with a polybasic acid compound

(hereinafter referred to as "Carboxyl Polymer 2"); and a polymer obtained by condensation of a hydroxyl polymer including a hydroxyl monomer as a monomer unit with a polybasic acid compound (hereinafter referred to as "Carboxyl Polymer 3").

As a hydroxyl group-containing polymer to be used for synthesis of Polymer 2 having an ethylenic unsaturated bond, a copolymer of a hydroxyl monomer and a monomer which copolymerize with the hydroxyl monomer, and/or a phenoxy resin is preferred.

As examples of a carboxyl monomer to be used for synthesis of Carboxyl Polymer 1 there may be mentioned (meth)acrylic acid, α-bromo(meth)acrylic acid, α-chloro(meth)acrylic acid, β-furyl(meth)acrylic acid, β-styryl(meth) acrylic acid, maleic acid, maleic anhydride, maleic acid monoesters such as monomethyl maleate, monoethyl maleate and monoisopropyl maleate, fumaric acid, cinnamic acid, α-cyanocinnamic acid, itaconic acid, crotonic acid and propionic acid. Particularly preferred among these is (meth)acrylic acid. The above-mentioned carboxyl monomers may be used alone or in combinations of two or more. Meanwhile, according to the present invention, "(meth)acrylic" means acrylic or methacrylic, and likewise (meth)acrylate" means acrylate or methacrylate.

As a copolymerizable monomer to be used for synthesis of Carboxyl Polymer 1 or Polymer 2 having an ethylenic unsaturated bond there may be mentioned a (meth)acrylic acid esters represented by general formula (5) below, which are preferably one or more (meth)acrylic acid esters selected from the group consisting of (meth)acrylic acid alkyl ester, (meth)acrylic acid cycloalkyl ester and (meth)acrylic acid cycloalkenyl ester.

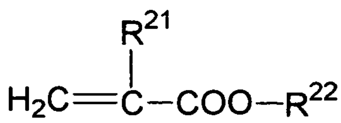 · · · (5)

wherein $R^{21}$ represents a hydrogen atom or a methyl group and $R^{22}$ represents a C1 to C12 alkyl group. $R^{22}$ may have a straight-chain structure, a branched structure or a cyclic structure.

As examples of a (meth)acrylic acid alkyl ester there may be mentioned a (meth)acrylic acid methyl ester, a (meth)acrylic acid ethyl ester, (meth)acrylic acid propyl ester, (meth)acrylic acid butyl ester, (meth)acrylic acid pentyl ester, (meth)acrylic acid hexyl ester, (meth)acrylic acid heptyl ester, (meth)acrylic acid octyl ester and (meth)acrylic acid 2-ethylhexyl ester. An example of a (meth)acrylic acid cycloalkyl ester is a isobornyl (meth)acrylate. These may be used alone or in combinations of two or more. Particularly preferred is the use of a combination of (meth)acrylic acid alkyl ester and (meth)acrylic acid cycloalkyl ester.

As examples of a phenoxy resin to be used for synthesis of Carboxyl Polymer 2 or Polymer 2 having an ethylenic unsaturated bond there may be mentioned a polyhydroxypolyether obtained by polymerization of bisphenol A with epichlorohydrin. The weight-average molecular weight of the phenoxy resin is preferably 10,000 to 100,000. The repeating units of the bisphenol A unit and the epichlorohydrin unit in the polyhydroxypolyether may be in a random chain structure or a block chain structure.

As a hydroxyl monomer to be used for synthesis of Polymer 1 or 2 having an ethylenic unsaturated bond there may be mentioned (meth)acrylic acid hydroxyalkyl ester, and such compound may be represented by the following general formula (6).

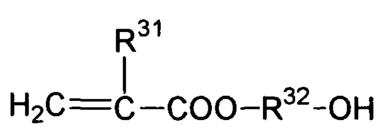 · · · (6)

In this formula, $R^{31}$ represents a hydrogen atom or a methyl group, and $R^{32}$ represents a C1 to C12 alkylene group. $R^{32}$ may have a straight-chain structure, a branched structure or a cyclic structure. A C1 to C6 alkylene group is preferred as $R^{32}$. Particularly preferred as the hydroxyl monomer is 2-hydroxyethyl (meth)acrylate.

The aforementioned hydroxyl monomer may be used as a monomer unit for the hydroxyl polymer used for synthesis of Carboxyl Polymer 3, or for the hydroxyl group-containing polymer used for synthesis of Polymer 2 having an ethylenic unsaturated bond. As examples of the hydroxyl polymer or hydroxyl group-containing polymer there may be mentioned a copolymer of hydroxyl monomers and (meth)acrylic acid esters. The repeating units of the copolymer may be in a random chain or block chain.

As a polybasic acid compound to be used for synthesis of Carboxyl Polymer 2 or 3 there may be mentioned a polybasic acid or an acid anhydride thereof. As examples of the polybasic acid there may be mentioned a dicarboxylic acid compound, a tricarboxylic acid compound and a tetracarboxylic acid compound, with a dicarboxylic acid compound

represented by the following general formula (7) being preferred.

$$HOOC\text{-}R^{61}\text{-}COOH \qquad (7)$$

As an acid anhydride of a polybasic acid there may be mentioned an acid anhydride corresponding to the aforementioned polybasic acid, among which an acid anhydride of the dicarboxylic acid compound represented by general formula (7) above is preferred.

Thus, Carboxyl Polymer 2 refers to a polymer produced by condensation of a phenoxy resin with a polybasic acid, and/or a polymer produced by ring-opening condensation of a phenoxy resin with a polybasic acid anhydride. Such polymer has a ester bond due to the aforementioned reaction, and an ether bond due to the phenoxy resin. Carboxyl Polymer 3 refers to a polymer produced by condensation of a hydroxyl polymer with a polybasic acid, and/or a polymer produced by ring-opening condensation of a hydroxyl polymer with a polybasic acid anhydride. Such polymer has a ester bond due to the aforementioned reaction.

In general formula (7) above, $R^{61}$ represents a C1 to C18 straight-chain or branched alkylene group, and is preferably a C2 to C10 straight-chain or branched alkylene group and more preferably a C2 to C6 straight-chain or branched alkylene group. As the alkylene group there may be mentioned a methylene group, a ethylene group, trimethylene group, tetramethylene group, a pentamethylene group, a hexamethylene group, a heptamethylene group, a octamethylene group, a nonamethylene group, a decamethylene group, a dimethylmethylene group, a diethylmethylene group, a propylene group, a methylethylene group, a ethylethylene group, a propylethylene group, a isopropylethylene group, a methylpentaethylene group, a ethylhexamethylene group, a dimethylethylene group, a methyltriethylene group, a dimethyltrimethylene group and a octadecylmethylene group.

Examples of a glycidyl monomer to be used for synthesis of Polymer 1 or 2 having an ethylenic unsaturated bond include: an aliphatic epoxy group-containing unsaturated compound such as glycidyl (meth)acrylate, β-methylglycidyl methacrylate and allylglycidyl ether; a alicyclic epoxy group-containing unsaturated compound such as 1,2-epoxycyclohexylmethyl (meth)acrylate, among which glycidyl (meth)acrylate is preferred.

As examples of an isocyanate monomer to be used for synthesis of Polymer 2 having an ethylenic unsaturated bond there may be mentioned a aliphatic isocyanate unsaturated compound such as alkyl (meth)acrylate isocyanate. Examples of the alkyl (meth)acrylate isocyanate include ethyl (meth)acrylate isocyanate, methyl (meth)acrylate isocyanate and propyl (meth)acrylate isocyanate, among which ethyl (meth)acrylate isocyanate is preferred.

(Photopolymerizable compound)

The photopolymerizable compound having an ethylenic unsaturated bond (hereinafter referred to simply as "photopolymerizable compound" or "component (B)") in the photosensitive resin composition may consist of a single or plurality of photopolymerizable compounds.

The photopolymerizable compound preferably comprises a bisphenol A-based (meth)acrylate compound, and the bisphenol A-based (meth)acrylate compound is preferably a compound represented by the following general formula (8).

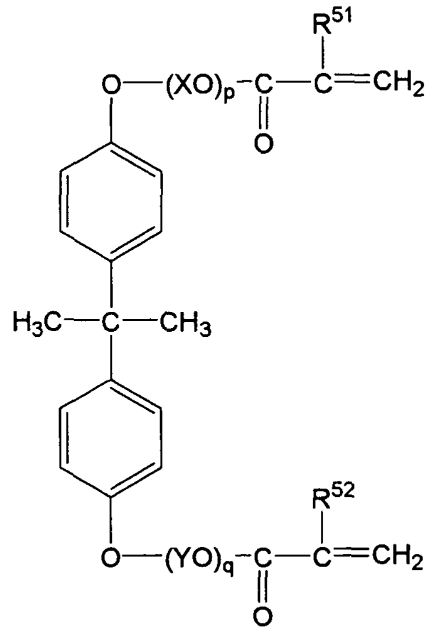

· · · (8)

In general formula (8) above, $R^{51}$ and $R^{52}$ each independently represents a hydrogen atom or a methyl group. X and Y each independently represents a C2 to C6 alkylene group, and preferably each is independently a ethylene group or a propylene group, and more preferably both are a ethylene gorup.

In general formula (8) above, p and q are positive integers selected so that p + q = 4 to 40, and are preferably integers of 6 to 34, more preferably 8 to 30, even more preferably 8 to 28, particularly preferably 8 to 20, very preferably 8 to 16 and most preferably 8 to 12. If p + q is less than 4, compatibility with the binder polymer (component (A)) will tend to be reduced, and if p + q is greater than 40 the increased hydrophilicity will tend to result in higher moisture absorption of the cured layer.

The aromatic ring in general formula (8) may have a substituent, and as examples of the substituente there may be mentioned a halogen atom, a C1 to C20 alkyl group, a C3 to C10 cycloalkyl group, a C6 to C18 aryl group, a phenacyl group, an amino group, a C1 to C10 alkylamino group, a C2 to C20 dialkylamino group, a nitro group, a cyano group, a carbonyl group, a mercapto group, a C1 to C10 alkylmercapto group, an allyl group, a hydroxyl group, a C1 to C20 hydroxyalkyl group, a carboxyl group, a C2 to C11 carboxyalkyl group, a C2 to C11 acyl group, a C1 to C20 alkoxy group, a C1 to C20 alkoxycarbonyl group, a C2 to C10 alkylcarbonyl group, a C2 to C10 alkenyl group, a C2 to C10 N-alkylcarbamoyl group, a heterocyclic ring-containing group, and an aryl group substituted with these substituents. The substituents above may form fused rings, and hydrogen atoms in the substituents may be replaced with the aforementioned substituent such as halogen atom. If two or more substituents are present, the two or more substituents may be the same or different.

As examples of a compound represented by general formula (8) there may be mentioned 2,2-bis(4-((meth)acryloxypolyethoxy)phenyl)propane, 2,2-bis(4-((meth)acryloxypolypropoxy)phenyl)propane, 2,2-bis(4-((meth)acryloxypolybutoxy)phenyl)propane and 2,2-bis(4-((meth)acryloxypolyethoxypolypropoxy)phenyl)propane, any one or two or more of which may be used in combination.

As examples of the 2,2-bis(4-((meth)acryloxypolyethoxy)phenyl)propane there may be mentioned 2,2-bis(4-((meth)acryloxydiethoxy)phenyl)propane, 2,2-bis(4-((meth)acryloxytriethoxy)phenyl)propane, 2,2-bis(4-((meth)acryloxytetraethoxy)phenyl)propane, 2,2-bis(4-((meth)acryloxypentaethoxy)phenyl)propane, 2,2-bis(4-((meth)acryloxyhexaethoxy)phenyl)propane, 2,2-bis(4-((meth)acryloxyheptaethoxy)phenyl)propane, 2,2-bis(4-((meth)acryloxyoctaethoxy)phenyl)propane, 2,2-bis(4-((meth)acryloxynonaethoxy)phenyl)propane, 2,2-bis(4-((meth)acryloxydecaethoxy)phenyl)propane, 2,2-bis(4-((meth)acryloxyundecaethoxy)phenyl)propane, 2,2-bis(4-((meth)acryloxydodecaethoxy)phenyl)propane, 2,2-bis(4-((meth)acryloxytridecaethoxy)phenyl)propane, 2,2-bis(4-((meth)acryloxytetradecaethoxy)phenyl)propane, 2,2-bis(4-((meth)acryloxypentadecaethoxy)phenyl)propane and 2,2-bis(4-((meth)acryloxyhexadecaethoxy)phenyl)propane.

2,2-Bis(4-((meth)acryloxypentaethoxy)phenyl)propane is commercially available as BPE-500 (trade name of Shin Nakamura Chemical Industries Co., Ltd.), and 2,2-bis(4-((meth)acryloxypentadecaethoxy)phenyl)propane is commercially available as BPE-1300 (trade name of Shin Nakamura Chemical Industries Co., Ltd.).

As examples of 2,2-bis(4-((meth)acryloxypolypropoxy)phenyl)propanes there may be mentioned 2,2-bis(4-((meth)acryloxydipropoxy)phenyl)propane, 2,2-bis(4-((meth)acryloxytripropoxy)phenyl)propane, 2,2-bis(4-((meth)acryloxytetrapropoxy)phenyl)propane, 2,2-bis(4-((meth)acryloxypentapropoxy)phenyl)propane, 2,2-bis(4-((meth)acryloxyhexapropoxy)phenyl)propane, 2,2-bis(4-((meth)acryloxyheptapropoxy)phenyl)propane, 2,2-bis(4-((meth)acryloxyoctapropoxy)phenyl)propane, 2,2-bis(4-((meth)acryloxynonapropoxy)phenyl)propane, 2,2-bis(4-((meth)acryloxydecapropoxy)phenyl)propane, 2,2-bis(4-((meth)acryloxyundecapropoxy)phenyl)propane, 2,2-bis(4-((meth)acryloxydodecapropoxy)phenyl)propane, 2,2-bis(4-((meth)acryloxytridecapropoxy)phenyl)propane, 2,2-bis(4-((meth)acryloxytetradecapropoxy)phenyl)propane, 2,2-bis(4-((meth)acryloxypentadecapropoxy)phenyl)propane and 2,2-bis(4-((meth)acryloxyhexadecapropoxy)phenyl)propane.

As examples of 2,2-bis(4-((meth)acryloxypolyethoxypolypropoxy)phenyl)propanes there may be mentioned 2,2-bis(4-((meth)acryloxydiethoxyoctapropoxy)phenyl)propane, 2,2-bis(4-((meth)acryloxytetraethoxytetrapropoxy)phenyl)propane and 2,2-bis(4-((meth)acryloxyhexaethoxyhexapropoxy)phenyl)propane.

Derivatives of a bisphenol A-based (meth)acrylate compound may also be used, and as such derivatives there may be mentioned a compound obtained by addition of acrylic acid to bisphenol A-diepoxy (DGEBA), which is commercially available as, for example, VISCOAT #540 (trade name of Osaka Organic Chemical Industries Co., Ltd.).

As examples of a photopolymerizable compound other than bisphenol A-based (meth)acrylate compound which can be used as the photopolymerizable compound there may be mentioned tricyclodecanedimethanol di(meth)acrylate; neopentylglycol-modified trimethylolpropane di(meth)acrylate; a compound obtained by reacting an α,β-unsaturated carboxylic acid with a polyhydric alcohol; a compound obtained by reacting an α,β-unsaturated carboxylic acid with a glycidyl group-containing compound; an urethane monomer such as (meth)acrylate compound having an urethane bond in the molecule; nonylphenyldioxylene (meth)acrylate; γ-chloro-β-hydroxypropyl-β'-(meth)acryloyloxyethyl-o-phthalate; β-hydroxyethyl-β'-(meth)acryloyloxyethyl-o-phthalate; β-hydroxypropyl-β'-(meth)acryloyloxyethyl-o-phthalate; (meth)acrylic acid alkyl ester; EO-modified nonylphenyl (meth)acrylate and the like. Tricyclodecanemethanol di(meth)acrylate is suitable for increasing the Tg of the cured photosensitive resin composition.

As examples of a compound obtained by reacting a α,β-unsaturated carboxylic acid with a polyhydric alcohol there may be mentioned a polyethyleneglycol di(meth)acrylate having 2 to 14 ethylene groups, a polypropyleneglycol di(meth)acrylate having 2 to 14 propylene groups, trimethylolpropane di (meth) acrylate, trimethylolpropane tri(meth)acrylate, trimethylolpropaneethoxy tri(meth)acrylate, trimethylolpropanediethoxy tri(meth)acrylate, trimethylolpropanetriethoxy tri(meth)acrylate, trimethylolpropanetetraethoxy tri(meth)acrylate, trimethylolpropanepentaethoxy tri(meth)acrylate, tetramethylolmethane tri(meth)acrylate, tetramethylolmethane tetra(meth)acrylate, a polypropyleneglycol di(meth)acrylate having 2 to 14 propylene groups, dipentaerythritol penta(meth)acrylate and dipentaerythritol hexa(meth)acrylate.

Two or more different photopolymerizable compounds of the aforementioned photopolymerizable compounds are preferably used in combination for the photosensitive resin composition of the present invention. A preferred combination of photopolymerizable compounds is a combination of a tri-or greater functional photopolymerizable compound and a monofunctional or difunctional photopolymerizable compound. Including a tri- or greater functional photopolymerizable compound can yield a cured photosensitive resin composition having a Tg in the satisfactory range (100 to 180°C). From the standpoint of the shrinkage ratio after curing, an acrylate-based photopolymerizable compound is preferably included in the photopolymerizable compound.

(Photopolymerization initiator)

The photopolymerization initiator (hereinafter, "component (C)") in the photosensitive resin composition may be any one which enables polymerization of the photopolymerizable compound and is not particularly restricted, but it is preferably a photopolymerization initiator which produces free radicals by ultraviolet light or visible light rays.

As the photopolymerization initiator there may be mentioned : benzoin ethers such as benzoin methyl ether, benzoin ethyl ether, benzoin propyl ether, benzoin isobutyl ether and benzoin phenyl ether; benzophenones such as benzophenone, N,N'-tetramethyl-4,4'-diaminobenzophenone (Michler's ketone) and N,N'-tetraethyl-4,4'-diaminobenzophenone; benzyl ketals such as benzyldimethyl ketal (IRGACURE 651, Chiba Specialty Chemicals) and benzyldiethyl ketal; acetophenones such as 2,2-dimethoxy-2-phenylacetophenone, p-*tert*-butyldichloroacetophenone and p-dimethylaminoacetophenone; xanthones such as 2,4-dimethylthioxanthone and 2,4-diisopropylthioxanthone, hydroxycyclohexylphenyl ketone (IRGACURE 184, Chiba Specialty Chemicals); 1-(4-isopropylphenyl)-2-hydroxy-2-methylpropan-1-one (DAROCURE 1116, Merck); 2-hydroxy-2-methyl-1-phenylpropan-1-one (DAROCURE 1173, Merck) and 2,2-dimethoxy-1,2-diphenylethan-1-one, any of which may be used alone or in combinations of two or more.

A preferred photopolymerization initiator is 1-hydroxy-cyclohexyl-phenyl-ketone from the standpoint of excellent compatibility and low yellowing, and this compound is commercially available as IRGACURE 184 (trade name of Chiba Specialty Chemicals Co., Ltd.).

(Content of photosensitive resin composition)

Components (A), (B) and (C) are preferably present in the following content. Specifically, the content of component (A) is preferably 30 to 90 parts by weight, and more preferably 45 to 70 parts by weight, with respect to 100 parts by weight as the total of component (A) and component (B). If the content of component (A) is less than 30 parts by weight with respect to 100 parts by weight as the total of component (A) and component (B), the cured product will tend to be brittle and the coatability will tend to be poor for formation of the photosensitive element. If the content is greater than 90 parts by weight, the photosensitivity will tend to be reduced.

The content of component (B) is preferably 10 to 70 parts by weight, and more preferably 30 to 55 parts by weight, with respect to 100 parts by weight as the total of component (A) and component (B). If the content of component (B) is less than 10 parts by weight with respect to 100 parts by weight as the total of component (A) and component (B), the photosensitivity will tend to be reduced, and if the content is greater than 70 parts by weight, the cured product will tend to be brittle and the coatability will tend to be poor for formation of the photosensitive element.

The content of component (C) is preferably 0.1 to 20 parts by weight, and more preferably 0.2 to 10 parts by weight, with respect to 100 parts by weight as the total of component (A) and component (B). If the content of component (C) is less than 0.1 part by weight with respect to 100 parts by weight as the total of component (A) and component (B), the photosensitivity will tend to be reduced, and if the content is greater than 20 parts by weight, absorption will be increased on the surface of the composition during light exposure, whereby photocuring of the interior will tend to be insufficient.

(Other added components)

If necessary, components other than components (A), (B) and (C) may be added, including a photopolymerizable compound having one or more cationic polymerizable cyclic ether groups in the molecule (oxetane compounds and the like), a cationic polymerization initiator, a dye such as malachite green, a photoinduced color generator such as tribromophenylsulfone and leuco crystal violet, a thermal coloration preventer, a plasticizer such as p-toluenesulfonamide, a pigment, a filler, an antifoaming agent, a flame retardant, a stabilizer, a tackifying agent, a leveling agent, a release promoter, an antioxidant, a perfume, an imaging agent, a thermal crosslinking agent and the like, at about 0.01 to 20 parts by weight of each with respect to 100 parts by weight of the total of component (A) and component (B). These additives may be used alone or in combinations of two or more.

(Photosensitive element)

The photosensitive element of the invention comprises a support and a photosensitive resin composition layer containing the aforementioned photosensitive resin composition of the present invention formed on the support, and the photosensitive element may be further comprises a protective film covering the photosensitive resin composition layer.

The photosensitive resin composition layer may be formed by dissolving, if necessary, the photosensitive resin composition in a solvent such as methanol, ethanol, acetone, methyl ethyl ketone, methyl cellosolve, ethyl cellosolve, toluene, N,N-dimethylformamide or propyleneglycol monomethyl ether, or in a mixture of these solvents, to form a solution with a solid portion of about 25 to 70 wt%, and then applying the solution by a publicly known process using a roll coater, comma coater, gravure coater, air knife coater, die coater, bar coater or the like, onto the support and drying it.

The drying may be conducted at 70 to 150°C for about 5 to 30 minutes, and the amount of residual organic solvent in the photosensitive resin composition layer is preferably no greater than 2 wt% from the viewpoint of preventing dispersion of the organic solvent during the subsequent steps. When the photosensitive element comprises a protective film, the protective film is preferably used to cover the formed photosensitive resin composition layer after drying of the organic solvent solution.

The support used may be a polymer film with heat resistance and solvent resistance, such as polyethylene terephthalate, polypropylene, polyethylene, polyester or polyimide, and the protective film used may be a polymer film with heat resistance and solvent resistance, such as polyethylene or polypropylene. The thickness of these polymer films is preferably 1 to 100 μm. The protective film preferably is one which results in lower adhesive force between the photosensitive resin composition layer and the protective film than between the photosensitive resin composition layer and the support, while a low fish-eye film is also preferred.

The thickness of the photosensitive resin composition layer in the photosensitive element is preferably about 1 to 100 μm after drying. The film thickness precision in this case is preferably ±2 μm, more preferably ±1.0 μm and particularly preferably ±0.5 μm based on the film thickness of the photosensitive resin composition layer after drying. If the film thickness precision is outside of the range of ±2 μm, the photosensitive resin composition layer will not be

uniformly laminated on the substrate, rendering nonuniform the film thickness of the spacer layer in the optical disk, lowering the precision of information reading from the optical disk, and tending to reduce the optical disk manufacturing yield. Here, according to the present invention, the film thickness precision is the difference with respect to the film thickness after curing of the photosensitive resin composition layer, and it is the average of 17 points measured at spacings of 20 mm in the film width direction (340 mm).

The moisture absorption of the photosensitive resin composition layer after curing is preferably no greater than 2%, more preferably no greater than 1.5% and even more preferably no greater than 1%. If the moisture absorption is greater than 2%, the photosensitive resin composition layer may undergo thermal expansion under high temperature conditions, and when used in an optical disk it may cause deformation of the recording layer. The moisture absorption according to the present invention is determined by cutting out a 5 cm x 5 cm size piece from the cured photosensitive element and removing the support or the protective film as well, subsequently immersing it in purified water at 23 ±2°C for 24 ±1 hours and using the difference between the weight of the cured film and the weight of the cured film before immersion in the formula $(M_2\text{-}M_1)/M_1$ x 100 (%).

The light transmittance of the cured photosensitive resin composition layer is preferably at least 85%, more preferably at least 90% and even more preferably at least 95% for light at a wavelength of 405 nm. If the light transmittance is less than 85%, the precision of information reading from the recording layer by the laser will tend to be lower, when the layer is used in an optical disk. According to the present invention, the light transmittance is obtained by bonding the photosensitive resin composition layer with a transparent substrate under pressure and determining the difference in light transmittance (405 nm light wavelength) between the substrate with the cured photosensitive resin composition layer (20 μm thickness) and the substrate without the photosensitive resin composition layer.

The refractive index of the cured photosensitive resin composition layer is preferably the same as the refractive index of the transparent substrate in the optical disk, and the value is preferably about 1.5. The refractive index is the refractive index of the cured product obtained for light with a wavelength of 633 nm, using as the sample a glass substrate carrying the cured photosensitive resin composition layer.

The birefringence of the cured photosensitive resin composition layer is preferably no greater than 30 nm, more preferably no greater than 20 nm and even more preferably no greater than 15 nm for light with a wavelength of 633 nm. If the birefringence is greater than 30 nm, the circular polarized light of the reproduction light will be converted to elliptical polarized light, tending to lower the light quantity and reduce the optical disk reading precision.

The photosensitive element may be stored, for example, as a sheet, or as a roll wound on a cylindrical winding core via a protective film. The winding core may be plastic such as, for example, polyethylene resin, polypropylene resin, polystyrene resin, polyvinyl chloride resin, ABS resin (acrylonitrile-butadiene-styrene copolymer) or the like. When the element is wound as a roll, it is preferably wound so that the support is on the outer side. The edges of the wound photosensitive element roll are preferably provided with edge separators from the viewpoint of edge protection, and preferably with moisture-resistant edge separators from the viewpoint of edge fusion resistance. The packing method is preferably wrapping with a black sheet with low moisture permeability.

The following method may be mentioned as a method of laminating the photosensitive element on a transparent substrate (optical disk substrate) or recording layer, for manufacture of an optical disk.

First, in cases where a protective film is present in the photosensitive element, the protective film may be removed and the photosensitive resin composition layer heated to about 20 to 130°C while being bonded to a transparent substrate (polycarbonate, polymethyl methacrylate or the like) at a pressure of about 0.1 to 1 MPa (about 1 to 10 $kgf/cm^2$) (bonding under pressure via a support) for lamination of the photosensitive resin composition layer onto the transparent substrate. The lamination may be carried out under reduced pressure circumstance, and there are no particular restrictions on the laminated surface.

After removing the support, the laminated photosensitive resin composition layer is subjected to pressure bonding with a die (stamper) having cut pits or grooves, at a pressure of about 0.1 to 1 MPa (about 1 to 10 $kgf/cm^2$). The pressure bonding may also be carried out under reduced pressure circumstance. After die pressure bonding, the photosensitive resin composition may be irradiated with active light rays to form a cured photosensitive resin composition layer having pits or grooves. The light source for the active rays may be a publicly known light source which emits ultraviolet rays or visible light rays, such as a carbon arc lamp, mercury vapor arc lamp, high-pressure mercury lamp or xenon lamp.

The photosensitive resin composition of the present invention is useful not only as a spacer layer for an optical disk, but also as any protective film or spacer layer for uses which require transparency. Examples of such uses include protective films for optical disks, protective films attached to front/back side adherends of solar cells, and the like. In order to provide a photosensitive resin composition with excellent environmental resistance while avoiding impaired energy efficiency for a solar cell, the light transmittance is preferably 85% or greater, more preferably 90% or greater and especially preferably 95% or greater with respect to light of a wavelength of 800 nm.

[Examples]

Preferred examples of the present invention will now be explained in more detail, with the understanding that these examples are not limitative on the present invention.

[Preparation of photosensitive resin compositions]

(Preparation Examples 1 to 5 and 11 to 21)

The components listed in Table 1 were mixed to obtain solutions. The solutions obtained in Preparation Examples 1 to 5 were used as Solutions 1 to 5. The components listed in Tables 2 and 3 were also mixed to obtain solutions. The solutions obtained in Preparation Examples 11 to 21 were used as Solutions 11 to 21.

[Table 1]

| Composition | | Content (g) | | | | |
|---|---|---|---|---|---|---|
| | | Preparation Example 1 | Preparation Example 2 | Preparation Example 3 | Preparation Example 4 | Preparation Example 5 |
| Component (A) | Copolymer with wt.-av. mol. wt. 30,000 and dispersity of 6.8, obtained by copolymerizing methacrylic acid, methyl methacrylate and isobornyl methacrylate at wt. ratio of 20:60:20 and condensing with 2-hydroxyethyl methacrylate, dissolved in methyl ethyl ketone/toluene (6/4, wt. ratio) to a nonvolatile content of 50% | 120 (60 by solid wt.) | - | - | - | - |
| | Copolymer with wt.-av. mol. wt. 15,000 and dispersity of 3.6, obtained by copolymerizing methacrylic acid and methyl methacrylate at wt. ratio of 13:87 and condensing with 2-hydroxyethyl methacrylate, dissolved in methyl ethyl ketone/toluene (5/5, wt. ratio) to a nonvolatile content of 50% | - | 120 (60 by solid wt.) | 120 (60 by solid wt.) | - | - |
| | Aromatic polycarbonate (bisphenol Z type) resin with wt. av. mol. wt. 50,000, dissolved in toluene to a nonvolatile content of 30% | - | - | - | 167 (50 by solid wt.) | - |
| | Copolymer with wt.-av. mol. wt. 75,000 and dispersity of 2.5, obtained by copolymerizing methacrylic acid, methyl methacrylate and dimethylaminoethyl methacrylate at wt. ratio of 4.5:94.5:1.0, dissolved in toluene/propylene glycol monomethyl ether (6/4, wt. ratio) to a nonvolatile content of 40% | - | - | - | - | 112.5 (45 by solid wt.) |
| Component (C) | 1-Hydroxycyclohexyl phenyl ketone | 6 | 6 | 6 | 6 | - |
| | 2,2-Dimethoxy-1,2-diphenylethan-1-one | - | - | - | - | 6 |
| Solvent | Methyl ethyl ketone | 15 | 15 | 15 | 15 | 15 |

[Table 2]

| Composition | | Content (g) | | |
|---|---|---|---|---|
| | | Preparation Example 11 | Preparation Example 12 | Preparation Example 13 |
| Component (A) | Copolymer with wt.-av. mol. wt. 35,000 and dispersity of 6.8, obtained by copolymerizing methacrylic acid, methyl methacrylate and isobornyl methacrylate at wt. ratio of 14:50:36 and condensing with 2-hydroxyethyl methacrylate, dissolved in methyl ethyl ketone/toluene (6/4, wt. ratio) to a nonvolatile content of 50% | 120 (60 by solid wt.) | - | - |
| | Copolymer with wt.-av. mol. wt. 65,000 and dispersity of 4.2, obtained by copolymerizing methacrylic acid, methyl methacrylate and isobornyl methacrylate at wt. ratio of 14:50:36 and condensing with 2-hydroxyethyl methacrylate, dissolved in methyl ethyl ketone/toluene (6/4, wt. ratio) to a nonvolatile content of 50% | - | 120 (60 by solid wt.) | - |
| | Copolymer with wt.-av. mol. wt. 65,000 and dispersity of 4, obtained by copolymerizing methacrylic acid, methyl methacrylate and isobornyl methacrylate at wt. ratio of 15.5:48.5:36 and condensing with 2-hydroxyethyl methacrylate, dissolved in methyl ethyl ketone/toluene (6/4, wt. ratio) to a nonvolatile content of 50% | - | - | 120 (60 by solid wt.) |
| Component (C) | 1-Hydroxycyclohexyl phenyl ketone | 6 | 6 | 6 |
| | 2,2-Dimethoxy-1,2-diphenylethan-1-one | - | - | - |
| Solvent | Methyl ethyl ketone | 15 | 15 | 15 |

[Table 2]

| Composition | | Content (g) | |
|---|---|---|---|
| | | Preparation Example 14 | Preparation Example 15 |
| Component (A) | Copolymer with wt.-av. mol. wt. 65,000 and dispersity of 3.9, obtained by copolymerizing methacrylic acid, methyl methacrylate and isobornyl methacrylate at wt. ratio of 7:57:36 and condensing with 2-hydroxyethyl methacrylate, dissolved in methyl ethyl ketone/toluene (6/4, wt. ratio) to a nonvolatile content of 50% | 120 (60 by solid wt.) | - |
| | Copolymer with wt.-av. mol. wt. 75,000 and dispersity of 2.5, obtained by copolymerizing methacrylic acid, methyl methacrylate and dimethylamino ethylmethacrylate at wt. ratio of 4.5:94.5:1.0, dissolved in toluene/propylene glycol monomethyl ether (6/4, wt. ratio) to a nonvolatile content of 40% | - | 112.5 (45 by solid wt.) |
| Component (C) | 1-Hydroxycyclohexyl phenyl ketone | 6 | - |
| | 2,2-Dimethoxy-1,2-diphenylethan-1-one | - | 6 |
| Solvent | Methyl ethyl ketone | 15 | 15 |

[Table 3]

| Composition | | Content (g) | | | | | |
|---|---|---|---|---|---|---|---|
| | | Preparation Example 16 | Preparation Example 17 | Preparation Example 18 | Preparation Example 19 | Preparation Example 20 | Preparation Example 21 |
| Component (A) | Copolymer (wt.-av. mol. wt: 30,000; dispersity: 6.8), obtained by reacting a compound having a (meth)acryloyl group with the carboxyl group of a copolymer obtained by copolymerizing methacrylic acid, methyl methacrylate and isobornyl methacrylate at wt. ratio of 14:50:36, dissolved in methyl ethyl ketone/toluene (6/4, wt. ratio) to a nonvolatile content of 50% | 120 (60 by solid wt.) | - | - | - | - | - |
| | Copolymer (wt.-av. mol. wt: 15,000; dispersity: 3.6), obtained by reacting a compound having a (meth)acryloyl group with the carboxyl group of a copolymer obtained by copolymerizing methacrylic acid and methyl methacrylate at wt. ratio of 13:87, dissolved in methyl ethyl ketone/toluene (5/5, wt. ratio) to a nonvolatile content of 50% | - | 120 (60 by solid wt.) | 120 (60 by solid wt.) | - | - | - |
| | Polymer (wt. av. mol. wt: 60,000; dispersity: 4.1) obtained by dissolving phenoxy resin in cyclohexane/toluene (177/96, wt. ratio) and adding ethyl methacrylate isocyanate, prepared to a nonvolatile content of 33% | - | - | - | 182 (60 by solid wt.) | - | - |
| | Aromatic polycarbonate (bisphenol Z type) resin with wt. av. mol. wt. 50,000, dissolved in toluene to a nonvolatile content of 30% | - | - | - | - | 167 (50 by solid wt.) | 167 (50 by solid wt.) |
| Component (C) | 1-Hydroxycyclohexyl phenyl ketone | 6 | 6 | 6 | 6 | 6 | 6 |
| | 2,2-Dimethoxy-1,2-diphenylethan-1-one | - | - | - | - | - | - |
| Solvent | Methyl ethyl ketone | 15 | 15 | 15 | 15 | 15 | 15 |

(Examples 1 to 4 and 11 to 19, and Comparative Examples 1 , 11 and 12)

The components listed in Table 4 were dissolved in Solutions 1 to 5 obtained in Preparation Examples 1 to 5 to obtain photosensitive resin composition solutions. The components listed in Table 5 were dissolved in Solutions 11

to 15 obtained in Preparation Examples 11 to 15 to obtain photosensitive resin composition solutions. The components listed in Table 6 were dissolved in Solutions 16 to 21 obtained in Preparation Examples 16 to 21 to obtain photosensitive resin composition solutions.

[Table 4]

| Composition | | Example 1 | Example 2 | Example 3 | Example 4 | Comp. Ex. 1 |
|---|---|---|---|---|---|---|
| Solution obtained in preparation example | | Solution 1 | Solution 2 | Solution 3 | Solution 4 | Solution 5 |
| Component (B) (units : g) | HD-N*1 | 16 | 16 | 16 | 25 | - |
| | DPHA*2 | 12 | 12 | 12 | - | - |
| | ATMPT*3 | - | - | - | 25 | - |
| | VISCOAT #540*4 | 12 | 12 | - | - | - |
| | BPE-10*5 | - | - | 12 | - | 20 |
| | TMCH-5*6 | - | - | - | - | 35 |

[Table 5]

| Composition | | Example 11 | Example 12 | Example 13 | Example 14 | Comp. Ex. 11 |
|---|---|---|---|---|---|---|
| Solution obtained in preparation example | | Solution 11 | Solution 12 | Solution 13 | Solution 14 | Solution 15 |
| Component (B) (units : g) | HD-N*1 | 16 | 16 | 16 | 16 | - |
| | DPHA*2 | 12 | 12 | 12 | 12 | - |
| | ATMPT*3 | - | - | - | - | - |
| | VISCOAT #540*4 | 12 | 12 | 12 | 12 | - |
| | BPE-10*5 | - | - | - | - | 20 |
| | TMCH-5*6 | - | - | - | - | 35 |

[Table 6]

| Composition | | Example 15 | Example 16 | Example 17 | Example 18 | Example 19 | Comp. Ex. 12 |
|---|---|---|---|---|---|---|---|
| Solution obtained in preparation example | | Solution 16 | Solution 17 | Solution 18 | Solution 19 | Solution 20 | Solution 21 |
| Component (B) (units : g) | HD-N*1 | 16 | 16 | 16 | 10 | 25 | - |
| | DPHA*2 | 12 | 12 | 12 | - | - | - |
| | ATMPT*3 | - | - | - | 30 | 25 | - |
| | VISCOAT #540*4 | 12 | 12 | - | - | - | - |
| | BPE-10*5 | - | - | 12 | - | - | 25 |
| | TMCH-5*6 | - | - | - | - | - | - |
| | A-BPE-4*7 | - | - | - | - | - | 25 |
| | A-DCP*8 | - | - | - | 10 | - | - |

Reference numerals *1 to *8 in the tables indicate the following.
*1: Hexanediol dimethacrylate (by Shin Nakamura Chemical Industries Co., Ltd.)
*2: Dipentaerythritol hexaacrylate (by Nippon Kayaku Co., Ltd.)
*3: Trimethylolpropane triacrylate (by Shin Nakamura Chemical Industries Co., Ltd.)

*4: Bisphenol A-diepoxy-acrylic acid adduct (repeating unit n = 1.2) (by Osaka Organic Chemical Industries Co., Ltd.)
*5: Compound of general formula (8) wherein $R^{51}$ and $R^{52}$ are methyl, X and Y are ethylene groups, and p+q = 10 (mean value) (by Shin Nakamura Chemical Industries Co., Ltd.)
*6: Trimethylhexamethylene diisocyanate-based urethane diacrylate (sample, by Hitachi Chemical Co., Ltd.)
*7: Compound of general formula (8) wherein $R^{51}$ and $R^{52}$ are methyl, X and Y are ethylene groups, and p+q = 4 (mean value) (by Shin Nakamura Chemical Industries Co., Ltd.)
*8: Tricyclodecanedimethanol diacrylate (by Shin Nakamura Chemical Industries Co., Ltd.)

[Fabrication of photosensitive elements]

(Examples 5 to 8 and 20 to 28 and Comparative Examples 2, 13 and 14)

Next, each of the solutions of the examples and comparative examples was uniformly coated onto a 19 μm-thick polyethylene terephthalate film (PET film) (G2-19, trade name of Teijin Co., Ltd.) and dried for 10 minutes at 100°C with a hot-air convection drier, after which it was protected with a polyethylene protective film (NF-15, trade name of Tamapori Co., Ltd.; tensile strength in film lengthwise direction: 16 MPa, tensile strength in film widthwise direction: 12 MPa), to obtain a photosensitive element. The film thickness of the dried photosensitive resin composition layer was 12 μm. The elements using the solutions of Examples 1 to 4 and Comparative Example 1 correspond to Examples 5 to 8 and Comparative Example 2, respectively. The elements using the solutions of Examples 11 to 19 and Comparative Examples 11 to 12 correspond to Examples 20 to 28 and Comparative Examples 13 to 14.

Next, the photosensitive elements of the examples and comparative examples were evaluated for curing degree, light transmittance, glass transition temperature, moisture absorption, refractive index, birefringence and film thickness precision, in the manner described below. The photosensitive elements of Examples 5 to 8 and Comparative Example 2 were subjected to an environmental acceleration test in the manner described below. In the evaluations and tests, the lamination was carried out using a heat roll with a roll external diameter of 87.5 mmφ and a cylinder inner diameter of 40 mmφ, having silicon rubber (3 mm thickness) with a 70° hardness on the outside of the roll.

[Measurement of curing degree]

An infrared spectrophotometer (HORIBA FT-200, Horiba Laboratories Co., Ltd.) was used to determine the peak height at 812 $cm^{-1}$, as the characteristic absorption for out-of-plane bending vibration of acrylic bonds in the photopolymerizing compound in the photosensitive resin composition layer, for the photosensitive element before and after ultraviolet irradiation, and the curing degree for the photosensitive resin composition layer was determined from the height ratio. Fig. 6 shows an example of infrared absorption spectrum variation before and after ultraviolet irradiation. The curing degrees were measured before and after increasing the ultraviolet exposure dose by 100 mJ units, and the portions which had within 2 to 3% change of the curing degree after increase compared to the curing degree before increase were considered to have saturated photocuring, in which case the exposure dose before increase was recorded as the optimum value for curing.

[Measurement of light transmittance]

First, a heat roll at 50°C was used for lamination at a pressure of 0.5 MPa and a speed of 0.2 m/min, releasing the protective film of the photosensitive element while contacting the photosensitive resin composition layer with a polycarbonate (PC) substrate, to produce a three-layer structure comprising the PC substrate, photosensitive resin composition layer and PET film in that order. The photosensitive resin composition layer was then cured by ultraviolet irradiation from the PET film side using a large-size UV irradiator (QRM-2317-F-00 by Oak Corp.) equipped with a high-pressure mercury vapor lamp, to obtain an evaluation sample. The light transmittance was measured using the sample at 60 minutes after photocuring.

The evaluation sample obtained by the method described above was placed at the measuring end of a UV spectrophotometer (Model 228A W Beam spectrophotometer by Hitachi Laboratories Co., Ltd.), the PC substrate was placed at the reference end, continuous measurement was carried out for 900 to 190 μm in T% mode, and the difference in the light transmittance was measured by reading the value at 405 nm.

[Measurement of glass transition temperature (Tg)]

In Examples 5 to 8 and Comparative Example 2, TMA was used to measure the Tg in the following manner. The photosensitive resin composition layer of the photosensitive element was subjected to ultraviolet irradiation using a large-size UV irradiator (QRM-2317-F-00 by Oak Corp.) equipped with a high-pressure mercury vapor lamp, the

cured film was cut out to a 4 mm x 20 mm size to prepare a sample for Tg measurement, and a TMA120 (by Seiko Instruments, Inc.) was used for measurement of the Tg after photocuring of the photosensitive resin composition layer. The measuring conditions were a temperature range of 0 to 200°C, a temperature-elevating rate of 5°C/min, a load of 3 g, and tensile mode.

For Examples 20 to 28 and Comparative Examples 13 to 14, DMA was used for measurement of the Tg in the following manner. The photosensitive resin composition layer of the photosensitive element was subjected to ultraviolet irradiation using a large-size UV irradiator (QRM-2317-F-00 by Oak Corp.) equipped with a high-pressure mercury vapor lamp, the cured film was cut out to a 6 mm x 35 mm size to prepare a sample for Tg measurement, and an RSA-II viscoelastic analyzer (Rheometrics) was used for measurement of the dynamic viscoelasticity under the conditions listed below and with a temperature range of 0 to 200°C, a temperature elevating rate of 5°C/min and under tensile mode, to determine the Tg of the photosensitive resin composition layer after photocuring.

Options: Auto Tension Adjustment
Mode: Static Force Tracking Dynamic Force
Auto Tension Direction: Tension
Initial Static Force: 70 g

[Measurement of moisture absorption]

A large-size UV irradiator (QRM-2317-F-00 by Oak Corp.) equipped with a high-pressure mercury vapor lamp was used for ultraviolet irradiation and the cured film was cut out to a 5 cm x 5 cm size to prepare a sample for moisture absorption measurement, after which the moisture absorption of the photosensitive resin composition layer after photocuring was measured in the manner described below, according to JIS K-7209. First, the obtained sample was weighed, and the value was recorded as $M_1$. It was then immersed in purified water at 23 ±2°C for 24 ±1 hours. After immersion, the sample was removed from the purified water, the water droplets were wiped off and the sample was weighed, recording the value as $M_2$. The moisture absorption was determined by the formula $(M_2-M_1)/M_1$ x 100 (%).

[Measurement of refractive index]

A heat roll at 50°C was used for lamination at a pressure of 0.5 MPa and a speed of 0.2 m/min, releasing the protective film of the photosensitive element while contacting the photosensitive resin composition layer with a glass substrate (4 cm x 4 cm), and the photosensitive resin composition layer was subjected to ultraviolet irradiation using a large-size UV irradiator (QRM-2317-F-00 by Oak Corp.) equipped with a high-pressure mercury vapor lamp to prepare a refractive index measurement sample, after which a 2010 prism coupler (Metricon Co., Ltd.) was used to measure the refractive index of the cured photosensitive resin composition layer at a wavelength of 633 nm. The measurement was carried out in both TE mode and TM mode, and the average of both values was calculated as the measurement value.

[Measurement of birefringence]

A heat roll at 50°C was used for lamination at a pressure of 0.5 MPa and a speed of 0.2 m/min, releasing the protective film of the photosensitive element while contacting the photosensitive resin composition layer with a glass substrate (4 cm x 4 cm), and the photosensitive resin composition layer was then irradiated with ultraviolet rays using a large-size UV irradiator (QRM-2317-F-00 by Oak Corp.) equipped with a high-pressure mercury vapor lamp, to obtain a birefringence evaluation sample, after which an ADR-100XY (by Oak Corp.) was used to measure the birefringence of the photosensitive resin composition layer at 633 nm after curing. The measurement was carried out at 9 points on the sample, and the average of the 9 points was recorded.

[Measurement of film thickness precision]

A heat roll at 23°C was used for lamination at a pressure of 0.4 MPa and a speed of 1 m/min, releasing the protective film of the photosensitive element while contacting the photosensitive resin composition layer with a glass substrate (4 cm x 4 cm), and the photosensitive resin composition layer was then irradiated with ultraviolet rays using a large-size UV irradiator (QRM-2317-F-00 by Oak Corp.) equipped with a high-pressure mercury vapor lamp, to obtain a film thickness precision measurement sample, after which the film thickness of the cured photosensitive resin composition layer was measured using an MS-5C contact film thickness measuring instrument (Nikon Co., Ltd.), and the difference with 20 μm was recorded as the film thickness precision. The measurement was carried out at spacings of 20 mm in the film width direction (340 mm), and the average of 17 measurements was recorded.

[Environmental acceleration test]

A heat roll at 50°C was used for lamination at a pressure of 0.5 MPa and a speed of 0.2 m/min, releasing the protective film of the photosensitive element while contacting the photosensitive resin composition layer with a 12 cm diameter PC substrate, to produce a laminated structure comprising the PC substrate, photosensitive resin composition layer and PET film in that order. After releasing the PET film from the resulting laminated structure, a stamper was contacted with the photosensitive resin composition layer, and a heat roll at 50°C was used for lamination at a pressure of 0.5 Mpa and a speed of 0.05 m/min to transfer pits to the photosensitive resin composition layer. After transfer of the pits, the stamper was released to obtain a disk comprising the PC substrate and the pit-formed photosensitive resin composition layer. The photosensitive resin composition layer of the obtained disk was then irradiated with ultraviolet rays at 2 J/$cm^2$ using a large-size UV irradiator (QRM-2317-F-00 by Oak Corp.) equipped with a high-pressure mercury vapor lamp, to obtain an environmental acceleration test sample.

The obtained environmental acceleration test sample was allowed to stand for 314 hours in a thermo-hygrostat at 70°C, 90% RH. The shapes of the pits in each sample were observed before and after the test using a scanning electron microscope (S-4500, product of Hitachi Laboratories Co., Ltd.).

[Measurement of crosslinking density]

The crosslinking density of the cured photosensitive resin composition was calculated according to the following formula (1), based on the results of measurement of the storage elastic modulus in the dynamic viscoelasticity measurement described above.

$$\rho = E'/3\varphi RT \qquad (1)$$

An example of the method for calculating the crosslinking density will now be explained. Fig. 7 is an illustration showing the measurement results for the dynamic viscoelasticity of the photosensitive element of Example 20. For the cured film of the photosensitive resin composition of Example 20, the temperature which exhibited the maximum value for the tangent loss was 115.7°C. E' is the storage elastic modulus at 155.7°C, i.e. 115.7°C + 40°C, and T is the absolute temperature (428.7 K) at 155.7°C. The value for φ is 1. The value of p calculated by inserting these values into formula (1) was 3039 mmol/L. For Examples 21 to 28 and Comparative Examples 13 to 14 as well, the crosslinking densities of the cured photosensitive resin compositions were calculated using formula (1) above, according to the same method.

[Adhesion test]

The photosensitive elements of Examples 20 to 28 and Comparative Examples 13 to 14 were used for an adhesion test with a polycarbonate (PC) film as an optical disk substrate.

First, a heat roll at 110°C was used for lamination at a pressure of about 0.5 MPa (about 5 kgf/$cm^2$) and a speed of 0.2 m/min, releasing the protective film of the photosensitive element while contacting the photosensitive resin composition layer with a PC film (film thickness: 70 to 100 μm). This produced a three-layer structure comprising the PC film, photosensitive resin composition layer and PET film. The photosensitive resin composition layer was then subjected to ultraviolet irradiation from the PET film side using a large-size UV irradiator (QRM-2317-F-00 by Oak Corp.) equipped with a high-pressure mercury vapor lamp, and then the PET film was released to obtain an adhesion test sample. The adhesion test was conducted in the following manner, according to the method of JIS K-5400-8.5.3.

A cutter having a newly replaced blade was used to produce 40 mm-long nicks at the center of the test sample, reaching to the PC film and crossing at angles of 30° from each other. Next, cellophane tape was attached above two crossing nicks with an adhered section length of 50 mm, and then a rubber eraser was used to rub out the air pockets for complete attachment to the cured film. This was allowed to stand for 1 minute, and one edge of the cellophane tape was held while peeling in the vertical direction at one stroke. The condition of peeling at the X cut portion after peeling the cellophane tape was visually observed, and evaluated on the following scale.

good: No peeling off
poor: Total peeling off

The results of evaluating the light transmittance, glass transition temperature (Tg), moisture absorption, refractive index, birefringence and film thickness precision, as well as the results of the environmental acceleration test, for Examples 5 to 8 and Comparative Example 2, are shown in Table 7. The results of evaluating the light transmittance, Tg, moisture absorption, refractive index, birefringence, film thickness precision, crosslinking density and adhesion for

Examples 20 to 23 and Comparative Example 13 are shown in Table 8. The results of evaluating the light transmittance, glass transition temperature, moisture absorption, refractive index, birefringence, film thickness precision, crosslinking density and adhesion for Examples 24 to 28 and Comparative Example 14 are shown in Table 9.

[Table 7]

| | Example 5 | Example 6 | Example 7 | Example 8 | Comp. Ex. 2 |
|---|---|---|---|---|---|
| Light transmittance (%) | 95 | 96 | 98 | 97 | 62 |
| Tg (°C) | 91 | 101 | 100 | 116 | 65 |
| Moisture absorption (%) | 0.36 | 1 | 1 | 0.43 | 1.6 |
| Refractive index | 1.52 | 1.51 | 1.51 | 1.56 | 1.51 |
| Birefringence (nm) | 0.14 | 0.1 | 0.1 | 0.33 | 0.05 |
| Film thickness precision | ±0.5 | ±0.5 | ±0.5 | ±0.5 | ±0.5 |
| Environmental acceleration test | No deformation of pit shapes | No deformation of pit shapes | No deformation of pit shapes | No deformation of pit shapes | Deformation of pit shapes |

[Table 8]

| | Example 20 | Example 21 | Example 22 | Example 23 | Comp. Ex. 13 |
|---|---|---|---|---|---|
| Light transmittance (%) | 98 | 96 | 98 | 97 | 62 |
| Tg (°C) | 91 | 96 | 97 | 87 | 83 |
| Moisture absorption (%) | 0.85 | 0.86 | 1.07 | 0.90 | 1.6 |
| Refractive index | 1.52 | 1.51 | 1.51 | 1.51 | 1.51 |
| Birefringence (nm) | 0.14 | 0.08 | 0.1 | 0.33 | 0.05 |
| Film thickness precision | ±0.5 | ±0.5 | ±0.5 | ±0.5 | ±0.5 |
| Crosslinking density (mmol/L) | 3039 | 2577 | 2810 | 1321 | 1027 |
| Adhesion | good | good | good | good | poor |

[Table 9]

| | Example 24 | Example 25 | Example 26 | Example 27 | Example 28 | Comp. Ex. 14 |
|---|---|---|---|---|---|---|
| Light transmittance (%) | 95 | 96 | 98 | 98 | 97 | 97 |
| Tg (°C) | 128 | 131 | 121 | 100 | 141 | 75 |
| Moisture absorption (%) | 0.36 | 1.0 | 1.0 | 1.0 | 0.43 | 0.90 |
| Refractive index | 1.52 | 1.51 | 1.51 | 1.51 | 1.56 | 1.56 |
| Birefringence (nm) | 0.14 | 0.10 | 0.10 | 0.34 | 0.33 | 0.33 |
| Film thickness precision | ±0.5 | ±0.5 | ±0.5 | ±0.5 | ±0.5 | ±0.5 |

[Table 9] (continued)

| | Example 24 | Example 25 | Example 26 | Example 27 | Example 28 | Comp. Ex. 14 |
|---|---|---|---|---|---|---|
| Crosslinking density (mmol/L) | 5495 | 5343 | 5124 | 5551 | 1835 | 971 |
| Adhesion | good | good | good | good | good | poor |

The light transmittances of the cured photosensitive resin compositions of Examples 5 to 8, Examples 20 to 23 and Examples 24 to 28 were 90% or greater for light with a wavelength of 800 nm, and they were confirmed to be useful as protective films for solar battery cells with excellent environmental resistance while minimizing reduction in energy efficiency.

**Industrial Applicability**

As explained above, it is possible according to the present invention to provide a composition for formation of an optical disk spacer layer, which exhibits properties ordinarily required for a spacer layer, such as transparency with respect to the reading laser and a uniform film thickness, while also minimizing deformation of the recording layer due to thermal expansion or poor adhesion between the optical disk substrate and spacer layer.

**Claims**

**1.** A photosensitive resin composition for formation of a spacer layer in an optical disk comprising: two transparent substrates positioned opposite each other; and a recording layer and spacer layer positioned between the opposing sides of the transparent substrates,
wherein the photosensitive resin composition comprises:

a binder polymer;
a photopolymerizable compound having an ethylenic unsaturated bond; and
a photopolymerization initiator,
and has a glass transition temperature after curing of 100 to 180°C.

**2.** A photosensitive resin composition for formation of a spacer layer in an optical disk comprising: two transparent substrates positioned opposite each other; and a recording layer and spacer layer positioned between the opposing sides of the transparent substrates,
wherein the photosensitive resin composition comprises:

a binder polymer;
a photopolymerizable compound having an ethylenic unsaturated bond; and
a photopolymerization initiator,
and has a crosslinking density after curing of at least 1100 mmol/L, as calculated by the following formula (1):

$$\rho = E'/3\varphi RT \qquad (1)$$

wherein

$\rho$ is a crosslinking density;
T is a temperature 40°C greater than a temperature at which a maximum value of the loss tangent is exhibited when measuring the dynamic viscoelasticity with varying temperature;
E' is a storage elastic modulus at the temperature T;
$\varphi$ is a front coefficient; and
R is the gas constant.

**3.** A photosensitive resin composition for formation of a spacer layer in an optical disk comprising: two transparent substrates positioned opposite each other; and a recording layer and spacer layer positioned between the opposing sides of the transparent substrates,

wherein the photosensitive resin composition comprises:

a binder polymer;
a photopolymerizable compound having an ethylenic unsaturated bond; and
a photopolymerization initiator,
has a glass transition temperature after curing of 100 to 180°C,
and has a crosslinking density after curing of at least 1100 mmol/L, as calculated by the following formula (1):

$$\rho = E'/3\varphi RT \quad (1)$$

wherein

ρ is a crosslinking density;
T is a temperature 40°C greater than a temperature at which a maximum value of the loss tangent is exhibited when measuring the dynamic viscoelasticity with varying temperature;
E' is a storage elastic modulus at the temperature T;
φ is a front coefficient; and
R is the gas constant.

**4.** A photosensitive resin composition for formation of a spacer layer in an optical disk comprising: two transparent substrates positioned opposite each other; and a recording layer and spacer layer positioned between the opposing sides of the transparent substrates,
wherein the photosensitive resin composition comprises:

a binder polymer;
a photopolymerizable compound having an ethylenic unsaturated bond; and
a photopolymerization initiator,
and the binder polymer comprises an aromatic polycarbonate.

**5.** A photosensitive resin composition according to claim 4,
wherein the glass transition temperature of the photosensitive resin composition after curing is 100 to 180°C.

**6.** A photosensitive resin composition according to claim 4,
wherein the crosslinking density of the photosensitive resin composition after curing is at least 1100 mmol/L, as calculated by the following formula (1):

$$\rho = E'/3\varphi RT \quad (1)$$

wherein

ρ is a crosslinking density;
T is a temperature 40°C greater than a temperature at which a maximum value of the loss tangent is exhibited when measuring the dynamic viscoelasticity with varying temperature;
E' is a storage elastic modulus at the temperature T;
φ is a front coefficient; and
R is the gas constant.

**7.** A photosensitive resin composition according to claim 4,
wherein the aromatic polycarbonate is a polymer including a repeating unit represented by the following general formula (1):

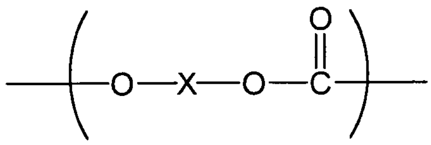

· · · (1)

wherein

X represents a divalent group represented by formula (2) below, a divalent group represented by formula (3) below or a divalent group represented by formula (4) below.

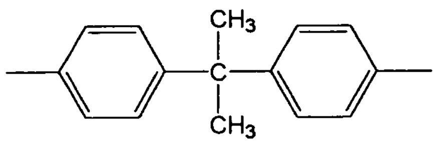

· · · (2)

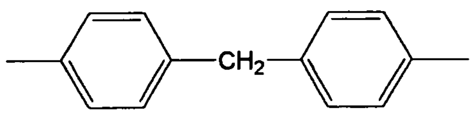

· · · (3)

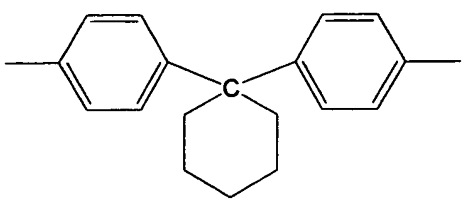

· · · (4)

**8.** A photosensitive resin composition according to claim 4,
wherein the weight-average molecular weight of the aromatic polycarbonate is 10,000 or greater.

**9.** A photosensitive resin composition for formation of a spacer layer in an optical disk comprising: two transparent substrates positioned opposite each other; and a recording layer and spacer layer positioned between the opposing sides of the transparent substrates,
wherein the photosensitive resin composition comprises:

a binder polymer;
a photopolymerizable compound having an ethylenic unsaturated bond; and
a photopolymerization initiator,
and the binder polymer includes a polymer having an ethylenic unsaturated bond on a side chain.

**10.** A photosensitive resin composition according to claim 9,
wherein the glass transition temperature of the photosensitive resin composition after curing is 100 to 180°C.

**11.** A photosensitive resin composition according to claim 9,
wherein the crosslinking density of the photosensitive resin composition after curing is at least 1100 mmol/L, as calculated by the following formula (1):

$$\rho = E'/3\varphi RT \qquad (1)$$

wherein

ρ is a crosslinking density;
T is a temperature 40°C greater than a temperature at which a maximum value of the loss tangent is exhibited when measuring the dynamic viscoelasticity with varying temperature;
E' is a storage elastic modulus at the temperature T;
φ is a front coefficient; and
R is the gas constant.

**12.** A photosensitive resin composition according to claim 9,
wherein the polymer having an ethylenic unsaturated bond on a side chain is a polymer obtained by reacting a carboxyl group-containing polymer with at least one monomer selected from the group consisting of: a hydroxyl monomer having an ethylenic unsaturated bond and a hydroxyl group; and a glycidyl monomer having an ethylenic unsaturated bond and a glycidyl group.

**13.** A photosensitive resin composition according to claim 12,
wherein the carboxyl group-containing polymer is a copolymer of a carboxyl group-containing carboxyl monomer and a monomer which copolymerize with the carboxyl monomer.

**14.** A photosensitive resin composition according to claim 12,
wherein the carboxyl group-containing polymer is a polymer obtained by condensation of a phenoxy resin with a polybasic acid compound.

**15.** A photosensitive resin composition according to claim 12,
wherein the carboxyl group-containing polymer is a polymer obtained by condensation of a hydroxyl polymer including as a monomer unit a hydroxyl monomer having an ethylenic unsaturated bond and a hydroxyl group, with a polybasic acid compound.

**16.** A photosensitive resin composition according to claim 9,
wherein the polymer having an ethylenic unsaturated bond on a side chain is a polymer obtained by reacting a hydroxyl group-containing polymer with at least one monomer selected from the group consisting of: a glycidyl monomer having an ethylenic unsaturated bond and a glycidyl group; and an isocyanate monomer having an ethylenic unsaturated bond and an isocyanate group.

**17.** A photosensitive resin composition according to claim 16,
wherein the hydroxyl group-containing polymer is a phenoxy resin.

**18.** A photosensitive resin composition according to claim 16,
wherein the hydroxyl group-containing polymer is a copolymer of a hydroxyl monomer having an ethylenic unsaturated bond and a hydroxyl group and a copolymerizable monomer which copolymerize with the hydroxyl monomer.

**19.** A photosensitive resin composition according to claim 13,
wherein the carboxyl monomer is a (meth)acrylic acid.

**20.** A photosensitive resin composition according to claim 13 or 18,
wherein the copolymerizable monomer is a (meth)acrylic acid ester.

**21.** A photosensitive resin composition according to claim 20,
wherein the (meth)acrylic acid ester is at least one kind of (meth)acrylic acid ester selected from the group consisting of: a (meth)acrylic acid alkyl ester; a (meth)acrylic acid cycloalkyl ester; and a (meth)acrylic acid cycloalkenyl ester.

**22.** A photosensitive resin composition according to claim 12, 15 or 18,
wherein the hydroxyl monomer is a (meth)acrylic acid hydroxyalkyl ester.

**23.** A photosensitive resin composition according to claim 12 or 16,
wherein the glycidyl monomer is a glycidyl (meth)acrylate.

**24.** A photosensitive resin composition according to claim 16,

wherein the isocyanate monomer is an alkyl (meth)acrylate isocyanate.

**25.** A photosensitive resin composition according to any one of claims 1, 2, 3, 4 or 9,
wherein the content of the photopolymerization initiator is 0.1 to 20 parts by weight with respect to 100 parts by weight as the total of 30 to 90 parts by weight of the binder polymer and 70 to 10 parts by weight of the photopolymerizable compound.

**26.** A photosensitive element comprising:

a support; and
a photosensitive resin composition layer composed of a photosensitive resin composition according to any one of claims 1, 2, 3, 4 or 9 formed on the support.

**27.** A photosensitive element according to claim 26,
wherein the moisture absorption of the photosensitive resin composition layer after curing is no greater than 2%.

**28.** A photosensitive element according to claim 26,
wherein the light transmittance of the photosensitive resin composition layer after curing is 85% or greater.

**29.** A photosensitive element according to claim 26,
wherein the film thickness precision of the photosensitive resin composition layer is $\pm 2$ μm.

**30.** A photosensitive resin composition for formation of a transparent protective film or a spacer layer,
wherein the photosensitive resin composition comprises:

a binder polymer;
a photopolymerizable compound with an ethylenic unsaturated bond; and
a photopolymerization initiator,
and has a glass transition temperature after curing of 100 to 180°C.

**31.** A photosensitive resin composition for formation of a transparent protective film or a spacer layer,
wherein the photosensitive resin composition comprises:

a binder polymer;
a photopolymerizable compound having an ethylenic unsaturated bond; and
a photopolymerization initiator,
and has a crosslinking density after curing of at least 1100 mmol/L, as calculated by the following formula (1):

$$\rho = E'/3\varphi RT \quad (1)$$

wherein

$\rho$ is a crosslinking density;
T is a temperature 40°C greater than a temperature at which a maximum value of the loss tangent is exhibited when measuring the dynamic viscoelasticity with varying temperature;
E' is a storage elastic modulus at the temperature T;
$\varphi$ is a front coefficient; and
R is the gas constant.

**32.** A photosensitive resin composition for formation of a transparent protective film or a spacer layer,
wherein the photosensitive resin composition comprises:

a binder polymer;
a photopolymerizable compound having an ethylenic unsaturated bond; and
a photopolymerization initiator,
has a glass transition temperature after curing of 100 to 180°C,

and has a crosslinking density after curing of at least 1100 mmol/L, as calculated by the following formula (1):

$$\rho = E'/3\varphi RT \quad (1)$$

wherein

$\rho$ is a crosslinking density;
T is a temperature 40°C greater than a temperature at which a maximum value of the loss tangent is exhibited when measuring the dynamic viscoelasticity with varying temperature;
E' is a storage elastic modulus at the temperature T;
$\varphi$ is a front coefficient; and
R is the gas constant.

**33.** A photosensitive resin composition used for formation of a protective film or spacer layer, wherein the photosensitive resin composition comprises:

a binder polymer;
a photopolymerizable compound having an ethylenic unsaturated bond; and
a photopolymerization initiator,
and the binder polymer comprises an aromatic polycarbonate.

**34.** A photosensitive resin composition used for formation of a protective film or spacer layer, wherein the photosensitive resin composition comprises:

a binder polymer;
a photopolymerizable compound having an ethylenic unsaturated bond; and
a photopolymerization initiator,
and the binder polymer includes a polymer having an ethylenic unsaturated bond on a side chain.

Fig.1

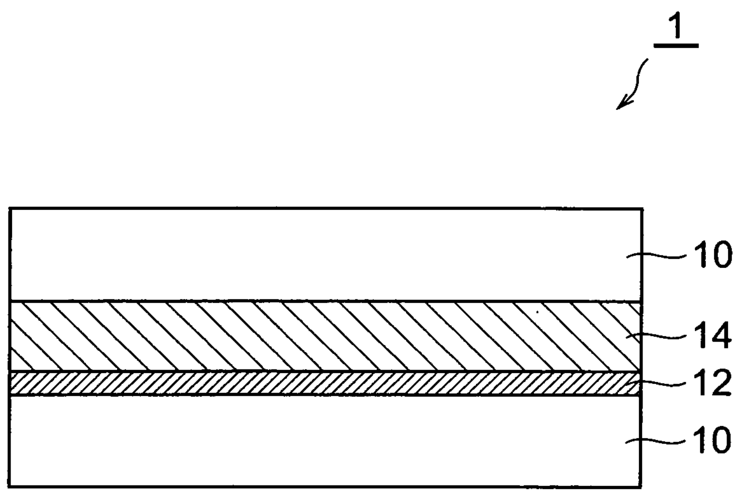


Fig.2

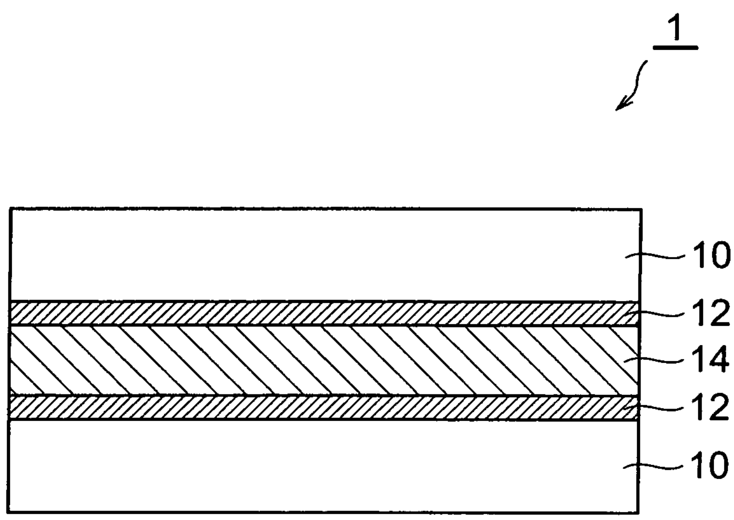

Fig.3

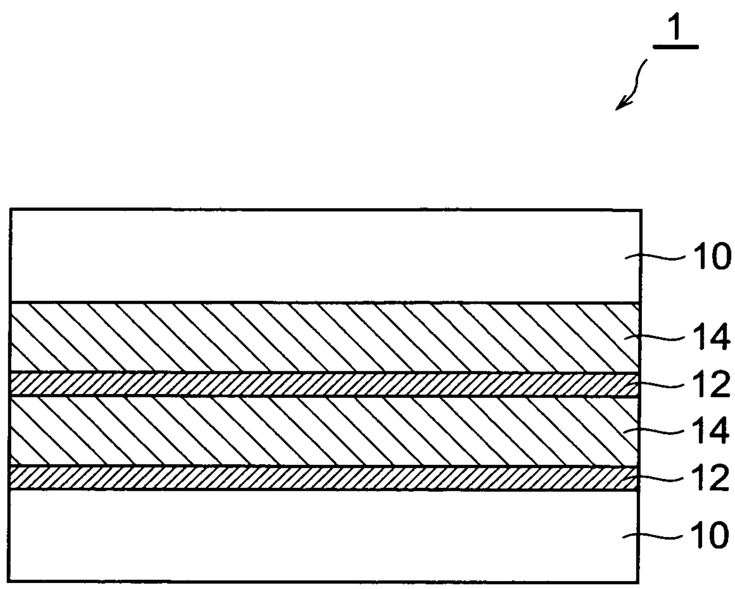


Fig.4

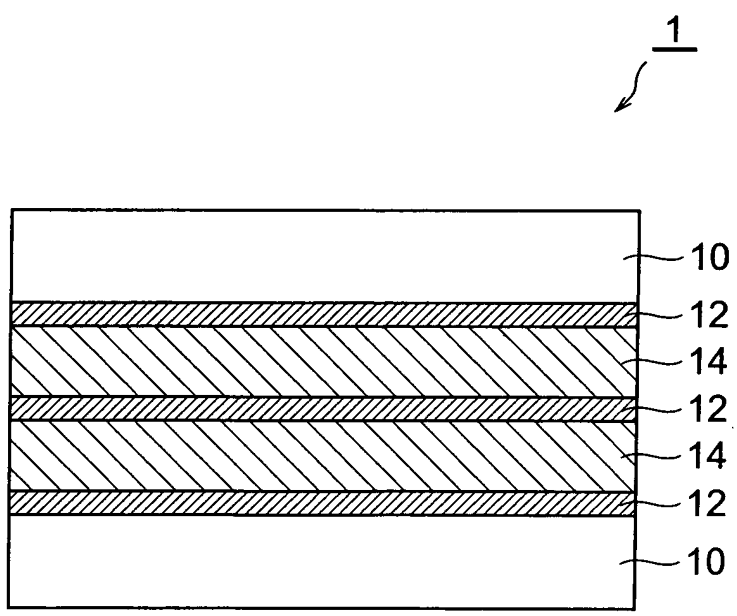

Fig.5A

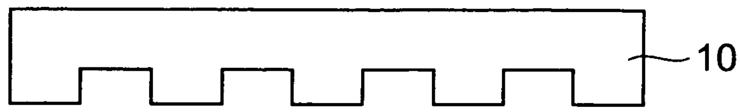


Fig.5B

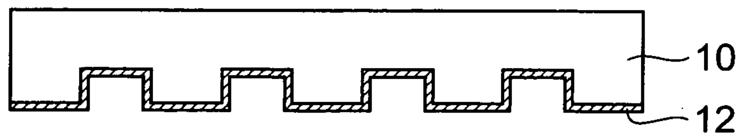


Fig.5C

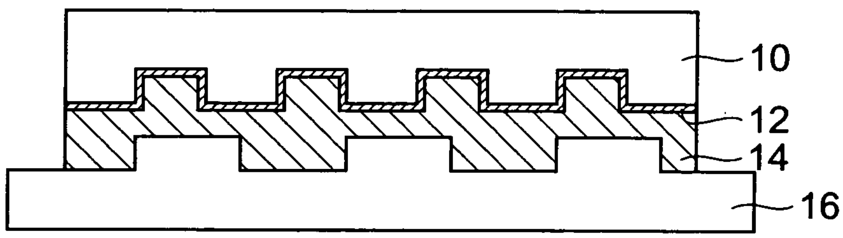


Fig.5D

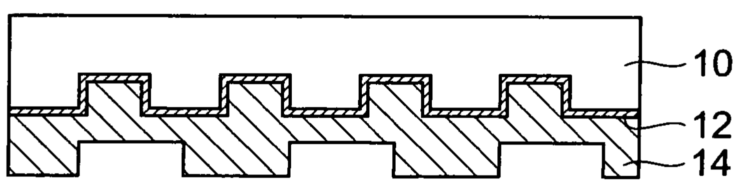


Fig.5E

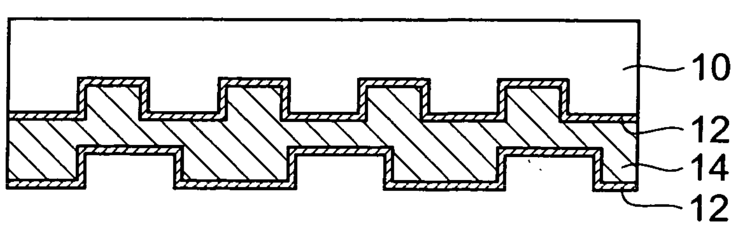

Fig.6

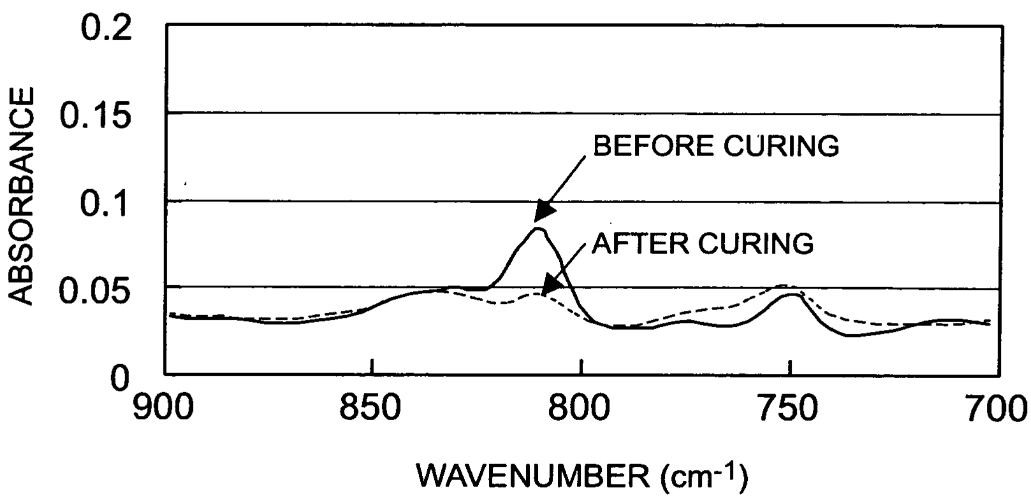
0.2
0.15
0.1
0.05
0
ABSORBANCE
BEFORE CURING
AFTER CURING
900
850
800
750
700
WAVENUMBER (cm-1)

*Fig.7*

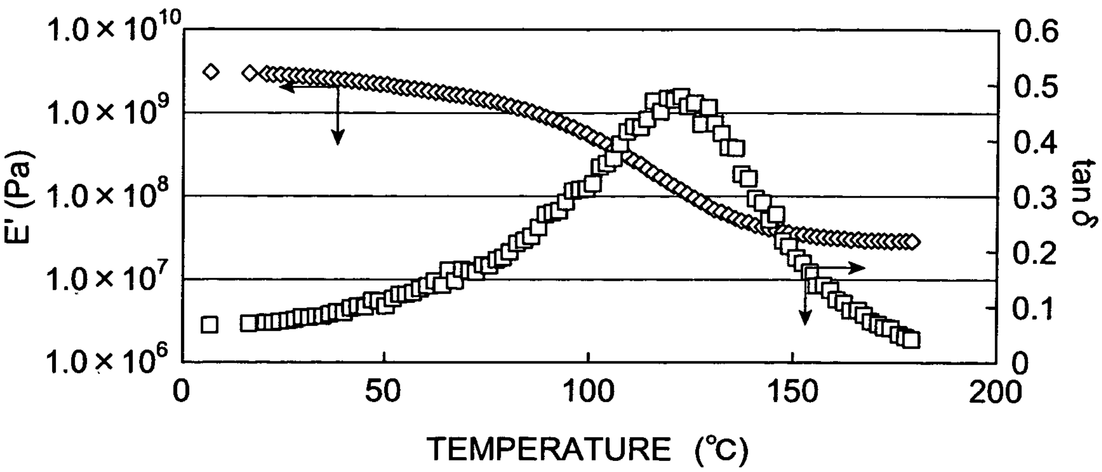
1.0×10^10
1.0×10^9
1.0×10^8
1.0×10^7
1.0×10^6
E' (Pa)
0.6
0.5
0.4
0.3
0.2
0.1
0
tan δ
0
50
100
150
200
TEMPERATURE (℃)

## INTERNATIONAL SEARCH REPORT

International application No.
PCT/JP03/08558

**A. CLASSIFICATION OF SUBJECT MATTER**
Int.Cl[7] G11B7/24

According to International Patent Classification (IPC) or to both national classification and IPC

**B. FIELDS SEARCHED**

Minimum documentation searched (classification system followed by classification symbols)
Int.Cl[7] G11B7/24

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2003 |
| Kokai Jitsuyo Shinan Koho | 1971-2003 | Toroku Jitsuyo Shinan Koho | 1994-2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2002-501556 A (DSM N.V., JSR Corp., Nippon Tokushu Coating Kabushiki Kaisha), 15 January, 2002 (15.01.02), Full text & WO 98/36325 A1 & JP 10-287718 A & EP 0960355 A & CN 1252136 T | 1,9,10, 12-25,28,30, 34 |
| Y | JP 4-101884 A (Teijin Ltd.), 03 April, 1992 (03.04.92), Full text & EP 0473346 A2 | 1-34 |
| Y | JP 8-160379 A (Fuji Xerox Co., Ltd.), 21 June, 1996 (21.06.96), Full text & US 5654046 A | 1,3-5,7-10, 30,32-34 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 30 September, 2003 (30.09.03) | 14 October, 2003 (14.10.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

## INTERNATIONAL SEARCH REPORT

International application No.
PCT/JP03/08558

C (Continuation). DOCUMENTS CONSIDERED TO BE RELEVANT

| Category* | Citation of document, with indication, where appropriate, of the relevant passages | Relevant to claim No. |
|---|---|---|
| Y | JP 9-293271 A (Victor Company Of Japan, Ltd.), 11 November, 1997 (11.11.97), Full text (Family: none) | 1,3,9,10,30, 32 |
| Y | JP 5-54432 A (Pioneer Electronic Corp.), 05 March, 1993 (05.03.93), Full text & US 5238723 A | 1,9,30,34 |
| Y | JP 2001-167478 A (Dainippon Ink And Chemicals, Inc.), 22 June, 2001 (22.06.01), Full text & WO 01/43128 A1 & EP 1152405 A1 | 1-4,9-27, 30-34 |
| Y | JP 11-191240 A (Sony Corp.), 13 July, 1999 (13.07.99), Full text (Family: none) | 28,30-34 |
| Y | JP 63-200335 A (TDK Corp.), 18 August, 1988 (18.08.88), Full text (Family: none) | 30-34 |
| Y | JP 7-44913 A (Canon Inc.), 14 February, 1995 (14.02.95), Full text (Family: none) | 30-34 |
| Y | JP 2002-25110 A (Bridgestone Corp.), 25 January, 2002 (25.01.02), Full text (Family: none) | 30-34 |
| Y | JP 2001-290269 A (Nichigo-Morton Co., Ltd.), 19 October, 2001 (19.10.01), Full text (Family: none) | 26-34 |
| Y | JP 2000-273128 A (Hitachi Chemical Co., Ltd.), 03 October, 2000 (03.10.00), Full text (Family: none) | 30-34 |
| Y | JP 2000-109544 A (Sekisui Chemical Co., Ltd.), 18 April, 2000 (18.04.00), Full text & WO 01/58979 A1 & AU 2462000 A & EP 1270636 A | 30-34 |

Form PCT/ISA/210 (continuation of second sheet) (July 1998)

## INTERNATIONAL SEARCH REPORT

International application No.
PCT/JP03/08558

C (Continuation). DOCUMENTS CONSIDERED TO BE RELEVANT

| Category* | Citation of document, with indication, where appropriate, of the relevant passages | Relevant to claim No. |
|---|---|---|
| A | JP 63-52344 A (Seiko Epson Corp.),<br>05 March, 1988 (05.03.88),<br>Full text<br>(Family: none) | 1-34 |
| A | JP 10-106035 A (Matsushita Electric Industrial Co., Ltd.),<br>24 April, 1998 (24.04.98),<br>Full text<br>(Family: none) | 1-34 |

Form PCT/ISA/210 (continuation of second sheet) (July 1998)